Europäisches Patentamt

European Patent Office

Office européen des brevets

(19)

(11) Numéro de publication: **0 445 173 B1**

(12) # FASCICULE DE BREVET EUROPEEN

(45) Date de publication de fascicule du brevet: **01.06.94**  (51) Int. Cl.⁵: **G06F 15/72**

(21) Numéro de dépôt: **89913062.9**

(22) Date de dépôt: **15.11.89**

(86) Numéro de dépôt internationale :
**PCT/FR89/00586**

(87) Numéro de publication internationale :
**WO 90/05958 (31.05.90 90/12)**

(54) **PROCEDE DE VISUALISATION D'UN OBJET DECOMPOSE EN UN OBJET OCTREE.**

(30) Priorité: **22.11.88 FR 8815167**

(43) Date de publication de la demande:
**11.09.91 Bulletin 91/37**

(45) Mention de la délivrance du brevet:
**01.06.94 Bulletin 94/22**

(84) Etats contractants désignés:
**DE NL**

(56) Documents cités:
**EP-A- 0 152 741**
**EP-A- 0 216 156**
**EP-A- 0 259 549**
**FR-A- 2 625 345**

**Computer Vision, Graphics and Image Processing, vol. 27. no. 2, août 1984, Academic Press, Inc., (New York, US) pages 211-238; M.-M. Yau: "Generating quadtrees of cross sections from octrees"**

(73) Titulaire: **GENERAL ELECTRIC CGR S.A.**
**100, rue Camille-Desmoulins**
**F-92130 Issy les Moulineaux(FR)**

(72) Inventeur: **LIS, Olivier**
**76-78, avenue de Paris**
**F-78000 Versailles(FR)**

(74) Mandataire: **Schmit, Christian Norbert Marie et al**
**Cabinet Ballot-Schmit**
**7, rue Le Sueur**
**F-75116 Paris (FR)**

**Description**

La présente invention a pour objet un procédé de visualisation d'un objet décomposé en un objet octree. Un objet octree est un objet dont la structure interne est connue au terme d'une décomposition octree. Dans une telle décomposition on remplace, pour l'ensemble des éléments de volume (voxels) représentant cet objet, un mode d'adressage de type cartésien par un mode de type à dichotomie hiérarchique. Dans le domaine médical, les décompositions de type octree ont montré leur parfaite adaptation à la représentation rapide d'images en visualisation des structures internes de tissus étudiés. Par exemple au cours d'expérimentations de tomographie (tomodensitométrie, investigations par résonance magnétique nucléaire, tomographies par scintigraphie, tomographie par ultrasons...) on acquiert la connaissance des structures internes d'un objet (d'un patient) étudié en attribuant aux éléments de volume (voxels) de cet objet, repérés par des coordonnées cartésiennes (x, y, z), des mesures de propriétés physiques correspondant à l'expérimentation entreprise. Un volume numérique est donc une collection d'adresses associées aux mesures d'une, ou de préférence plusieurs propriétés. Chaque voxel correspond alors à un champ d'adresses renseignant sur la position de ce voxel, et à un champ de propriétés. Une décomposition octree consiste, à partir d'un tel volume numérique, à trier des sous-ensemble d'objets, de plus en plus finement divisés, selon leur satisfaction à un critère.

En tomodensitométrie par exemple, le critère le plus communément choisi est celui de l'uniformité de la mesure de la densité radiologique. Ainsi, on examine si, pour tout un volume numérique parallélépipèdique, la densité radiologique mesurée associée à chaque voxel, est la même ou non. Dans tous les cas d'expérimentation, la réponse à cette première question est bien entendu non. Sinon cela signifierait que le volume étudié est homogène. On procède alors à une division du volume numérique en huit sous-volumes et on teste à nouveau, d'une manière semblable, chacun de ces sous-volumes. On procède ainsi de suite jusqu'à ce qu'on ait pu transformer le volume numérique en une nouvelle collection d'adresses associées à des propriétés. Les nouvelles adresses représentent en partie les niveaux hiérarchiques du test, tandis que le champ de propriété comporte maintenant une propriété supplémentaire : le sens de la réponse au test. Ce sens peut être dit "plein" noté F pour "full" si tous les voxels contenus dans la subdivision examinée ont satisfait au critère, il peut être dit "vide" noté E si aucun d'eux n'y a souscrit, et il peut être dit "partiel" noté P quand il y a indétermination. Chaque niveau hiérarchique est appelé "noeud" (on utilise aussi souvent les notions de "feuille", "octant", "obel",...). Chaque noeud peut être dit père, et quand il est subdivisé, il donne naissance à des noeuds fils. En définitive le volume entier est testé autant de fois qu'il y a de niveaux hiérarchiques dans la décomposition. Les résultats des tests peuvent cependant être déduits les uns des autres. La décomposition se simplifie cependant si on remarque que, quand un noeud père est plein (F) ou vide (V), les noeuds fils de ce noeud père sont respectivement obligatoirement pleins ou vides.

Ce type de décomposition qui présente l'inconvénient de devoir déterminer d'une part un critère et d'autre part d'imposer l'opération de décomposition qui peut être longue, a pour principal intérêt de conduire à une visualisation très simple de l'objet ainsi décomposé. En effet, en particulier dans le brevet américain 4 694 404 déposé le 12 janvier 1984 et intitulé HIGH SPEED IMAGE GENERATION OF COMPLEX SOLID OBJECTS USING OCTEE ENCODING on a décrit les opérations nécessaires pour visualiser un objet ainsi décomposé. Cette visualisation revient à effectuer une projection, sur un plan, de l'objet abstrait ainsi décomposé. On a montré dans ce brevet que la projection pouvait être d'orientation quelconque par rapport aux axes de représentation du volume numérique (x, y, z) même si ces axes ont par ailleurs aussi servi à organiser les subdivisions. Le principe de la projection consiste à remarquer, d'une part, que si un noeud père de l'octree se projette, d'une manière comparable, sur une petite surface du plan de projection, les noeuds fils de ce noeud père se projettent sur des subdivisions de cette surface. Les subdivisions de ces octrees sont des subdivisions par huit, elles correspondent à des subdivisions par quatre (d'où une notation de quadtree) de la surface de projection. On peut montrer que si un noeud père se projette dans un noeud père d'un quadtree, les noeuds fils de ce noeud père de cet octree se projettent dans les noeuds fils du noeud père du quadtree. D'autre part, dans un perfectionnement de la méthode, on a pu effectuer des projections selon des directions quelconques en remarquant que l'attribution d'un numéro d'ordre à des noeuds fils d'un noeud père de l'octree, conduisait à l'attribution de numéros d'ordre correspondant au noeud fils d'un noeud père du quadtree. La correspondance des numéros d'ordre est fixée par l'orientation de la projection. Ces constatations ont conduit à proposer des images en visualisation rapidement déterminées.

En outre, la technique octree laisse libre le champ des propriétés pour effectuer, dans la décomposition octree elle-même, un tri sur les noeuds de cette décomposition. Le tri consiste à déterminer quels noeuds possèdent en outre, une propriété répondant à un autre critère. On peut effectuer ainsi des subdivisions structurelles correspondant à une certaine cohérence des objets à montrer. Par exemple, en tomodensitométrie, on pourra ranger ou choisir les noeuds de l'octree selon la gamme de densité radiologique contenue dans leurs propriétés. En simplifiant, on pourra par exemple rechercher tous les noeuds dont le coefficient d'absorption radiologique est compris entre 100 et 200, ou encore on pourra rechercher ceux dont le coefficient d'absorption radiologique est compris entre 150 et 300. De ce point de vue, quand un noeud est dit partiel (P) vis à vis du critère de décomposition, on peut lui attribuer, dans le champ de ses propriétés, une propriété supplémentaire concernant le minimum et le maximum de la densité radiologique mesurée pour tous les voxels appartenant à ce noeud (ou le minimum et le maximum des mesures correspondant à n'importe quel autre phénomène impliqué dans le champ de propriétés). Cette manière d'agir peut avoir pour résultat de retenir, au moment d'une sélection, des noeuds partiels, pour peu que ce minimum et ce maximum soient contenus dans la gamme recherchée avec cette sélection.

Les gammes indiquées ci-dessus comportent une sous-gamme (150-200) commune à ces deux gammes. Il peut être intéressant dans certains cas de connaître l'intersection des deux parties de l'objet ayant correspondu à ces sous-gammes. D'autres types d'intersection sont envisageables. La méthode indiquée dans le brevet ci-dessus référencé, ne permet pas, à partir de deux sélections, de déduire la sélection de l'intersection. En particulier, cette méthode montre ses limites lorsque l'objet sélectionné correspondant à une gamme, n'est pas un objet monobloc, mais est au contraire un objet constitué de deux ou plusieurs parties disjointes : par exemple les maxillaires dans l'examen de la tête d'un patient. De même, cette technique ne permet pas la visualisation en perspective. En effet, les projections évoquées jusqu'ici sont toujours des projections droites : elles ne correspondent pas à une véritable visualisation pour laquelle on peut considérer que les directions de projection ne doivent plus être parallèles mais au contraire concourir en un point dit point de fuite. La visualisation en perspective apporte un confort de compréhension au praticien qui examine les images. Ce confort prédispose bien entendu à un meilleur diagnostic des affections que l'examen pourrait révéler.

Dans un perfectionnement du procédé breveté ci-dessus, décrit dans FR-A-2 625 345 intitulé "PROCEDE DE VISUALISATION EN TROIS DIMENSIONS D'OBJETS CODES NUMERIQUEMENT SOUS FORME ARBORESCENTE ET DISPOSITIF DE MISE EN OEUVRE", on a en partie résolu le problème de l'intersection en créant une décomposition octree virtuelle résultant de la projection d'un octree objet non plus directement sur un quadtree de représentation mais sur un octree intermédiaire dit "cible". Cette technique, qui peut permettre la représentation des objets séparés, peut conduire cependant à une masse de tests ou à une masse de calculs binaires considérable.

En effet, dans toute opération de visualisation (projection d'un octree sur un quadtree), on procède de l'avant vers l'arrière. Ceci signifie qu'on cherche à représenter l'image des parties directement visibles et non pas l'image des parties cachées situées derrière la face avant de l'objet. L'opération de représentation, ou de visualisation proprement dite, consiste à peindre (c'est le terme consacré) les noeuds du quadtree en fonction des états des noeuds de l'octree qui s'y projettent. Cependant, pour gagner du temps, une fois qu'un noeud du quadtree a été peint, on ne le repeint plus. Ceci conduit immédiatement à une opération dite de condensation. Dans celle-ci on évalue, à chaque fois qu'on a peint un noeud du quadtree, si le noeud père du noeud quadtree qu'on vient de peindre ne peut pas être considéré lui même comme entièrement peint du fait que tous les fils de ce noeud père auraient été peints. Cette opération qui est en elle même simplificatrice pour tous les traitements de visualisation effectués par la suite, et concernés par les mêmes éléments du quadtree, peut par contre s'avérer à l'origine de pertes de temps importantes lorsqu'on veut projeter deux objets différents. En effet il y a peu de chances pour que les quadtree peints correspondant à un noeud octree d'un objet correspondent quatre par quatre, aux quadtree peints pour un autre objet contigu à ce premier objet. L'opération de condensation qui conduit à la détermination d'un quadtree père dit de recouvrement en est compliquée.

Quand les intersections d'objets sont concernées, ou lorsque tout simplement les projections de deux objets disjoints conduisent elles mêmes à une intersection, le problème de la détermination de la condensation revient à comparer chacun des noeuds fils du quadtree, correspondant à une projection, aux huit noeuds voisins de ce quadtree résultant de la projection de l'autre objet. Si ces comparaisons conduisent à des noeuds pères de quadtree entier, le problème se simplifie. Cependant, dans la plupart des cas au moins un des noeuds voisins ne peut pas être considéré comme étant dans le même état (F, V, P) que le noeud testé. En conséquence, on est ainsi amené à comparer les états des noeuds fils de ce noeud du quadtree à chacun des noeuds fils des noeuds quadtree envisageables et comportant eux-mêmes comme fils ce noeud fils. Ainsi de suite, on effectue les comparaisons jusqu'à ce qu'on tombe sur une cohérence des comparaisons. On voit que très rapidement ce calcul peut diverger : il diverge d'autant plus qu'il doit être effectué pour quasiment chaque quadtree à représenter.

On peut par ailleurs montrer que dans le perfectionnement évoqué plus haut, quand certaines simplifications ne sont pas possibles, on peut être amené à une divergence similaire de calcul entre les projections des noeuds des octree objet dans l'octree cible. Dans ce cas en effet, à tout moment, un noeud fils d'un noeud père d'un octree objet trouve un recouvrement constitué de huit noeuds fils de l'octree virtuel. La méthode fonctionne bien si les objets et leurs projections sont disjoints. Elle ne fonctionne pas si les objets ou leur projections possèdent une intersection commune. Dans ce cas en effet la détermination , par condensation, des noeuds de l'intersection conduit à des tests qui peuvent être considérables (et par conséquent provoquer des pertes de temps incompatibles avec une représentation en temps réel des images). On rappelle, pour fixer les idées, que la méthode est destinée à permettre la visualisation au ralenti de l'objet comme s'il tournait devant l'oeil de l'observateur. Il faut donc être capable de produire les images très rapidement.

L'invention a pour objet de remédier à ces inconvénients en proposant une méthode dans laquelle on ne calcule pas de recouvrement, c'est à dire dans laquelle il n'y a pas ce type d'opérations de condensation. Dans l'invention on calcule la position exacte d'un noeud fils de l'octree réel dans l'octree virtuel, et on détermine l'octree virtuel par des plans de projection attachés à l'octree réel. On est alors capable de faire la projection d'un octree réel dans un octree virtuel dit cible. Plus généralement l'invention permet la sélection d'une partie d'un octree réel. Après projection de l'octree objet dans un octree cible, il est bien entendu possible de projeter d'une manière classique l'octree cible pour le visualiser. Mais l'invention peut permettre également d'effectuer simultanément la projection de l'octree objet dans l'octree cible et de l'octree cible sur le quadtree directement en vue d'aboutir à la visualisation des structures sélectionnées.

L'invention a donc pour objet un procédé tel que défini dans la revendication 1

L'invention sera mieux comprise à la lecture de la description qui suit et à l'examen des figures qui l'accompagnent. Les figures montrent :
- figures 1a à 1c : les différents modes de projection d'un octree objet dans un octree cible, dans l'état de la technique citée et dans la présente invention ;
- figures 2a à 2c : des circuits logiques à mettre en oeuvre dans le matériel de traitement de données pour concourir à la réalisation pratique de l'invention, et qui représentent l'algorithme particulier exploité par l'invention.
- figure 3 : une représentation schématique d'une décomposition vectorielle associée aux plans directeurs;
- figure 4 : une représentation théorique de la visualisation en perspective;
- figure 5 : une modification des circuits de la figure 2c pour convenir à la visualisation en perspective;
- figure 6 : une représentation "en perspective" d'une subdivision de l'octree objet.

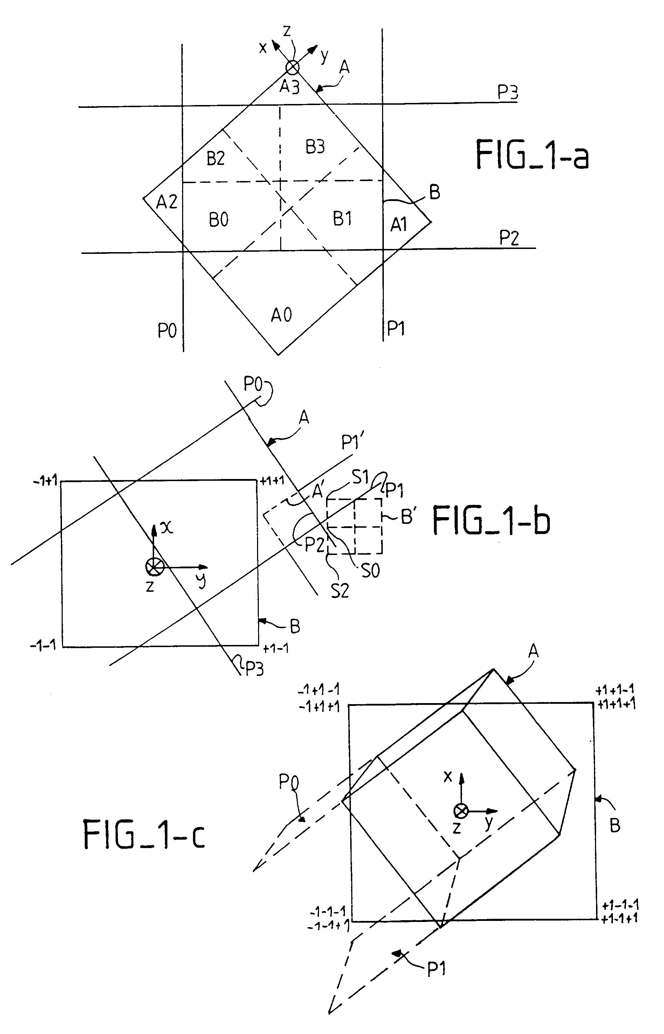

La figure 1a montre d'une manière schématique la projection d'un octree objet A dans un octree cible B. Cette projection est d'une manière connue une projection avec rotation (l'idée est bien entendu de présenter l'objet A selon diverses directions d'observation). Schématiquement on peut dire que l'opération de projection revient à évaluer quelles sont les subdivisions A0 - A3, de l'octree A qui ont une intersection avec des subdivisions B0 - B3, de l'octree B. Dans l'état de la technique citée on évaluait, dans un repère (x,y,z) associé à l'octree objet A, les orientations des plans directeurs tels que P0 à P3 de l'octree cible. La représentation des octree est dans cette figure comme dans la suivante, une représentation à deux dimensions pour faciliter la compréhension. Les plans directeurs sont, pour l'opération de décomposition les plans cartésiens du volume numérique qui conduisent à l'octree A, et pour l'octree cible, les plans définissant les 6 directions dites canoniques de projection.

Par contraste, dans l'invention, on évalue dans un repère (x,y,z) associé à l'octree B l'orientation des plans directeurs P0 à P3 de l'octree objet A. La figure 1b montre schématiquement à trois dimensions l'octree objet A s'introduisant dans l'octree cible B. L'octree cible B ressemble à un carré puisqu'un de ses plans directeurs est dans le plan de la figure . Dans l'invention on va calculer, dans un repère (x,y,z) associé à l'octree cible B, les orientations des plans tels que P0 et P1 limitant l'octree objet A. Quand on aura affaire aux subdivisions correspondantes de l'octree objet A et de l'octree cible B on remarquera que les plans P0 et P1 se transformeront en des plans parallèles : c'est à dire gardant des mêmes coefficients directeurs.

La figure 1c montre un repère orthonormé direct xyz associé à l'octree cible B. Elle montre encore dans ce repère les coordonnées réduites -1 -1 -1 à +1 +1 +1 des limites de l'octree cible B. Cette notion de réduction est importante dans l'invention. Elle permet, en choisissant judicieusement l'origine du repère par rapport à ces coordonnées réduites des sommets de l'octree cible B, de simplifier notablement les calculs de test. La notion d'octree A tourné ou projeté en octree cible B se comprend si on imagine qu'au lieu de faire la décomposition de type octree sur un objet présenté par rapport à un référentiel lié à A, on faisait la décomposition de ce même objet invariant dans l'espace, mais présenté par rapport à un référentiel lié à l'octree B. On comprend alors que les subdivisions de l'espace qui conduisent au niveau hiérarchique de décomposition d'un octree ne seraient pas les mêmes que celles qui seraient retenues si on retenait une autre orientation. Comme l'opération de décomposition est une opération longue, on préfère la faire une fois objet A, et ultérieurement reprojeter la décomposition octree A dite objet, en des décompositions octree cible avec des orientations que l'on peut déterminer comme on veut. Bien entendu, sachant qu'on sait faire une opération de projection, de tout l'octree, il est possible de faire une opération de projection d'une partie de l'octree c'est à dire une opération de projection et de sélection d'une partie de l'octree objet A.

Dans l'invention on va tirer parti de la différence qui paraît anodine, à savoir de travailler dans un repère lié à l'octree objet plutôt que de travailler dans un repère lié à l'octree cible, pour simplifier les calculs de projection. On montrera en outre que l'opération de projection dans l'octree cible peut être couplée à l'opération de projection sur le quadtree lui-même c'est à dire qu'on peut faire simultanément la sélection, la projection sur l'octree cible et la visualisation proprement dite d'une partie d'un octree objet. Dans le repère de l'octree cible B, l'équation d'un des plans P0 à P5 (il y a six plans qui définissent, eux aussi en coordonnées réduites, le "cube" occupé par l'octree objet) est de la forme

$$ax + by + cz + d = 0$$

Il est d'ailleurs possible d'écrire l'équation de ce plan sous la forme suivante

$$(-ax) + (-by) + (-cz) + (-d) = O.$$

De ces deux équations qui représentent un même plan, on extrait le fait que les coefficients directeurs a, b, et c peuvent avoir, d'une manière cohérente cependant, des signes opposés. Cette particularité est mise à profit pour évaluer la position d'un point quelconque de l'espace par rapport à ce plan. En effet, si on attribue aux variables xyz de ces équations les coordonnées d'un point extérieur au plan, l'expression ax + by + cz + d prend une valeur par rapport à zéro qui indique la position du point retenu par rapport à ce plan. Si on change le signe des coefficients le résultat du calcul change de signe, alors que le point de l'espace testé reste à la même place. On peut donc choisir les signes de ces coefficients pour que, pour des points particuliers, ces résultats aient des signes déterminés. Compte tenu de ce que on a considéré que l'octree objet était contenu entre six plans, on peut admettre que l'on obtiendra pour chacun de ces plans des coefficients directeurs a, b et c et un écart à l'origine d tels que les expressions de la forme ax + by + cz + d sont toutes positives, pour chacun de ces plans, pour tous les points appartenant à cet octree objet.

Dans l'invention, pour évaluer l'intersection de l'octree objet A avec l'octree cible B, ou plus justement l'intersection d'une subdivision à un niveau donné de l'octree objet A avec une subdivision à un niveau correspondant de l'octree cible B, on se contente de vérifier que, pour au moins un des sommets de l'octree cible, ou de la subdivision de l'octree cible B, de coordonnées x,y et z, les équations des plans sont de la forme

$$ax + by + cz + d > 0$$

et que

$$ax + by + cz + e < 0$$

pour au moins un autre sommet de l'octree cible B, ou de la subdivision de l'octree cible B. Dans ces expressions d et e représentent les écarts à l'origine de deux plans parallèles (même a, b et c) limitant la subdivision étudiée de l'octree objet. Si on compare le plan PO au plan P1, on remarque que les coefficients directeurs a b et c de ces plans sont les mêmes, seuls changent les écarts à l'origine de ces plans. Pour un de ces plans l'écart avec l'origine vaut d, pour l'autre, il vaut e. Il est important de noter la simplicité du critère d'intersection des subdivisions objet et cible ainsi retenu. En effet par opposition aux méthodes connues, on ne cherche pas vraiment ici la place de la subdivision cible étudiée par rapport à la subdivision objet projetée. On remarquera que ces deux tests reviennent à vérifier la place d'un sommet de l'octree cible dans un cas, et d'un autre sommet dans l'autre cas. On reviendra plus loin sur les conséquences de cette méthode.

Les conditions évoquées ci-dessus sont équivalentes à

$$|a| + |b| + |c| + d > 0 \text{ et}$$

$-|a| - |b| - |c| + e < 0.$

Ce test est valable pour une première paire de plans. Il existe en fait trois paires de plans P0 à P6 et dans ce cas le test global devient :

$$-d_1 < |a_1| + |b_1| + |c_1|$$
$$-d_2 < |a_2| + |b_2| + |c_2|$$
$$-d_3 < |a_3| + |b_3| + |c_3|$$

et

$$e_1 < |a_1| + |b_1| + |c_1|$$
$$e_2 < |a_2| + |b_2| + |c_2|$$
$$e_3 < |a_3| + |b_3| + |c_3|$$

Ce test global permet d'assurer que le volume inclus à l'intersection des six demi-espaces limitant l'octree objet intersecte bien l'octree cible B. Il en est de même s'il s'agit d'intersections entre des subdivisions de l'octree objet et de l'octree cible. Au début de la projection les coefficients $a_1$ $b_1$ $c_1$ $d_1$ $e_1$ etc... sont déterminés par la rotation qu'on veut faire subir à l'octree objet A pour le transformer en octree cible B.

On peut voir que le test concernant cette intersection est en fait une condition nécessaire mais non suffisante pour affirmer qu'il y a une intersection à coup sûr. Il peut se trouver en effets des situations où le test semble prouver qu'il y a intersection alors que celle-ci n'est pas réelle. On préserve néanmoins la simplicité de ce test qui, comme on le verra par la suite permet par des développements très simples d'effectuer très rapidement la projection de l'octree objet dans l'octree cible, en remarquant que si ce test s'avère positif alors que la réalité ne l'est pas, dans des subdivisions ultérieures des octree il ne l'est plus. De telle sorte que l'ambiguïté est alors levée toute seule.

Par exemple, sur la figure 1b, on a dessiné une configuration dans laquelle une subdivision B' d'un octree B semblerait, au sens du test évoqué ci-dessus, posséder une intersection avec la subdivision A' de l'octree A. En effet, un sommet S1 de la subdivision B' est compris entre les plans P1 et P1' tandis qu'un autre sommet S2 est compris entre les plans P2 et P2'. Cependant, si le test est ici positif, alors qu'il n'y a manifestement pas intersection des subdivisions A' et B', il n'en va pas de même du test suivant correspondant aux subdivisions A'' et B'' respectivement de A' et B'. En effet, le sommet S0 n'est plus inclus dans l'espace délimité par les plans délimitant les subdivisions de A' en A'', de sorte que l'intersection s'avère alors nulle. Par une opération équivalant à la condensation, évoquée précédemment pour les quadtree, il est alors possible de déclarer nulle l'intersection pour B', puisque B' ne contient aucune subdivision B'' ayant une intersection quelconque avec une des subdivisions A'' de A'. Il ne faut pas se tromper en fait sur le caractère fréquent de ce type d'aberration. En effet, alors que la figure 1b est représentée à deux dimensions, il convient de remarquer que dans l'invention le problème doit être évalué à trois dimensions. En conséquence les risques qu'une telle situation se produise, sont en fait bien moins fréquents qu'il pourrait paraître à première vue.

On va étudier maintenant séparément les méthodes qui permettent de subdiviser l'octree objet A et qui permettent de subdiviser corrélativement l'octree cible B. Pour subdiviser l'octree objet A il faut définir en position intermédiaire d'une paire donnée de plans, par exemple les plans P0 P1, un plan P'. D'une manière simple, l'équation de ce plan P' est déduite des équations des plans P1 et P0. Elle est de la forme :

$$ax + by + cz + (d + e)/2 = O$$

Dans une décomposition octree chaque noeud (même l'octree entier au niveau hiérarchique zéro), est divisé en huit noeuds fils numérotés de O à 7. Selon le numéro du noeud fils, selon le numéro de la subdivision, les équations des plans les délimitant peuvent être répertoriées. En particulier, si on admet que les numéros des subdivisions sont codés en binaire sur trois bits (un bit selon X, un bit selon Y et un bit selon Z) on peut écrire que les coefficients directeurs (a,b,c) des plans intermédiaires restent les mêmes mais que les écarts à l'origine d' et e' de ces plans intermédiaires prennent les valeurs indiquées dans le tableau suivant :

TABLEAU 1

| X | Y | Z | $d'_1$ | $e'_1$ | $d'_2$ | $e'_2$ | $d'_3$ | $e'_3$ |
|---|---|---|---|---|---|---|---|---|
| 0 | -- | -- | $d_1$ | $(^d1 + {}^e1)/2$ | | | | |
| 1 | -- | -- | $(^d1 + {}^e1)/2$ | $e1$ | | | | |
| -- | 0 | -- | | | $d_2$ | $(^de + {}^e2)/2$ | | |
| -- | 1 | -- | | | $(^d2 + {}^e2)/2$ | $e_2$ | | |
| -- | -- | 0 | | | | | $d_3$ | $(^d3 + {}^e3)/2$ |
| -- | -- | 1 | | | | | $(d_3 + e_3)/2$ | $e_3$ |

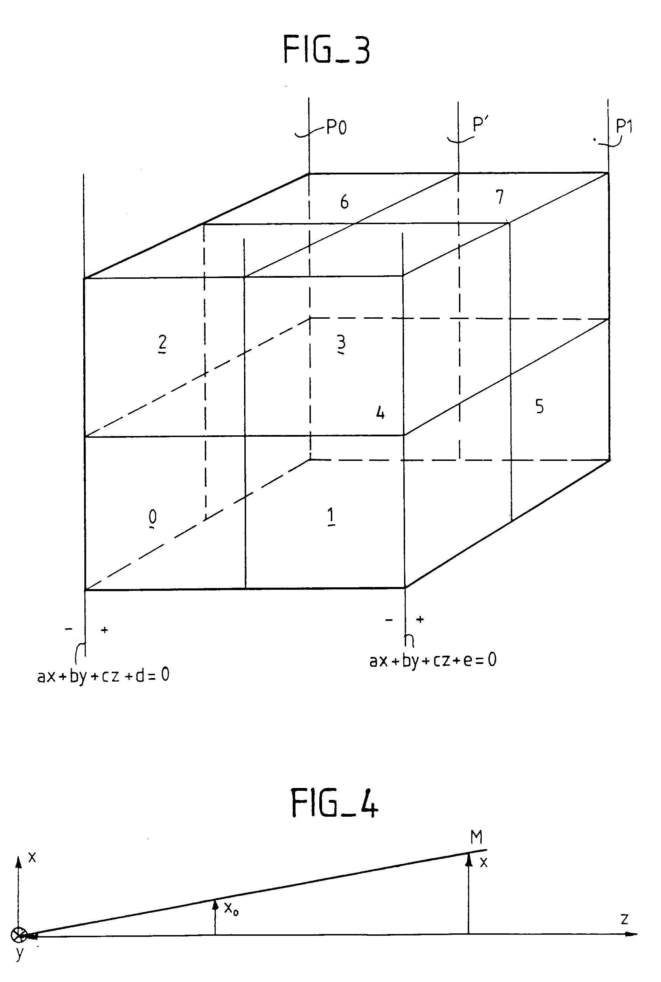

Ceci signifie par exemple, que toutes les subdivisions de l'octree objet dont le premier bit X de subdivision a pour valeur zéro (qui correspondent par exemple sur la figure 3 aux subdivisions octree de numéros pairs 0, 2, 4, 6) sont comprises maintenant entre des nouveaux plans P0' et P1' (d'écart à l'origine $d'_1$ et $e'_1$ respectivement) tels que ces écarts à l'origine ont les valeurs indiquées c'est à dire :

$$d'_1 = d_1 \text{ et } e'_1 = (d_1 + e_1)/2$$

Ceci signifie que le plan P0' se confond avec le plan P0 et que le plan P1' prend la place du plan P' sur la figure 3. Par contre on remarque que pour les numéros de subdivision impairs (1, 3, 5, 7) c'est le plan P0 qui vient prendre la place du plan P' tandis que le plan P1 est maintenu en place.

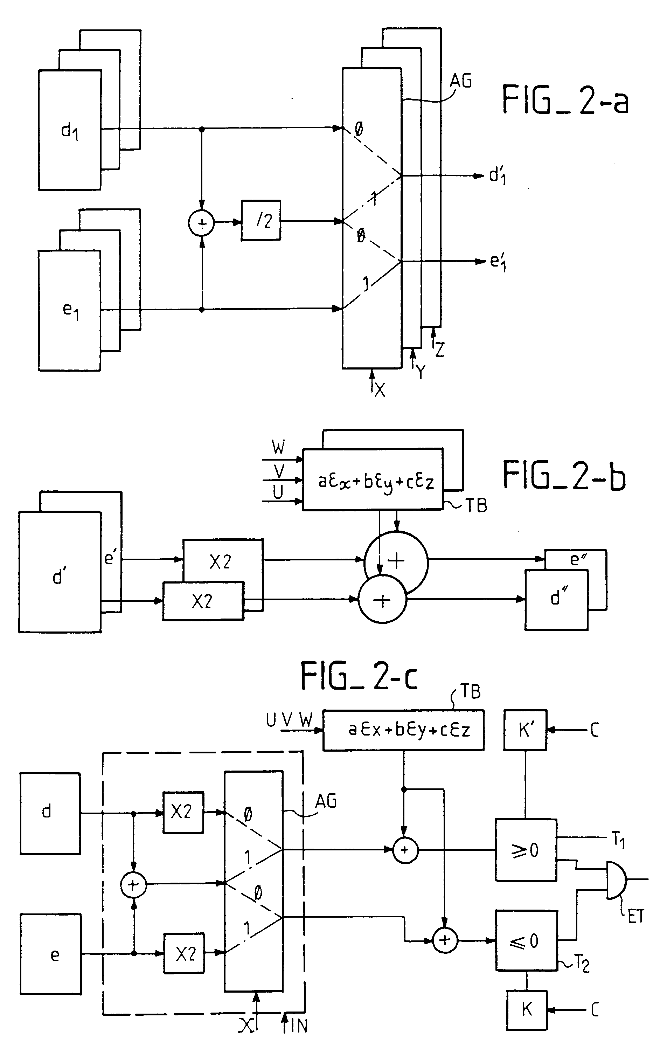

La figure 2a montre un circuit permettant, à partir de deux valeurs d'écart à l'origine $d_1$ et $e_1$ connues, de déduire les valeurs d'1 et e'1 des écarts à l'origine des plans limitant la subdivision octree objet concernée. Un circuit d'aiguillage AG permet, en fonction de l'état d'un bit (de la représentation binaire à trois bits) du numéro de la subdivision, de l'octree objet, de déterminer si d' = d et si e' = (d + e)/2 ou si e' = e et si d' = (d + e)/2. Dans ce but, le circuit d'aiguillage AG possède trois entrées pour recevoir sur deux premières entrées d et e, et sur une troisième entrée la demi-somme de d et e. Le circuit d'aiguillage AG possède deux sorties délivrant respectivement d' et e'. Il est tout à fait facile de s'inspirer de la représentation schématique de la figure 2a pour réaliser, soit sous forme logicielle, soit sous forme matérielle la fonction de calcul de d' et de e' à partir de la connaissance de d et e d'une part, et du numéro de la subdivision octree objet concernée d'autre part. En pratique le circuit de la figure 2a est triplé, compte tenu de ce qu'il existe trois paires de plans. Chacun des trois circuits d'aiguillage AG reçoit sur son entrée de commande le bit (X, Y, ou Z) concerné par les plans correspondants.

En ce qui concerne la subdivision de l'octree cible B, on cherche à conserver le caractère réduit des coordonnées des sommets de chacune des subdivisions résultant. Ainsi, par un changement de variable du type

$$x' = 2x - \epsilon x$$
$$y' = 2y - \epsilon y$$
$$z' = 2z - \epsilon z$$

on peut, en attribuant à $\epsilon x$, $\epsilon y$, $\epsilon z$ des valeurs données par le tableau 2 suivant :

TABLEAU 2

| U V W | $\epsilon X$ | $\epsilon y$ | $\epsilon z$ |
|---|---|---|---|
| 0 | + 1 | + 1 | + 1 |
| 1 | - 1 | + 1 | + 1 |
| 2 | + 1 | - 1 | + 1 |
| 3 | - 1 | - 1 | + 1 |
| 4 | + 1 | + 1 | - 1 |
| 5 | - 1 | + 1 | - 1 |
| 6 | + 1 | - 1 | - 1 |
| 7 | - 1 | - 1 | - 1 |

faire en sorte que les sommets de la subdivision octree cible étudiée possèdent des coordonnées entières allant de -1; -1; -1 à +1; +1; +1. U V W sont les représentations binaire du numéro de la subdivision octree cible à laquelle on veut comparer la subdivision octree objet.

L'évaluation d'une intersection revient alors, connaissant les six plans qui limitent, dans l'espace de l'octree cible, une subdivision donnée de l'octree objet, à évaluer si des sommets d'une subdivision donnée de l'octree cible satisfont aux inégalités présentées plus haut. Pour évaluer ce test, il faut alors, compte tenu du changement de repère, déterminer l'équation des plans limitant la subdivision de l'octree objet dans le sous-repère relatif à la subdivision octree cible avec laquelle on étudie l'éventuelle intersection. Si on remplace, dans l'équation d'un plan $ax + by + cz + d = O$, les variables $x$ $y$ et $z$ par leur valeur en fonction des variables $x'$ $y'$ $z'$ dépendant du nouveau repère, on obtient une nouvelle équation du plan de la forme :

$$ax' + by' + cz' + a_\epsilon x + b_\epsilon y + c_\epsilon z + 2d = 0$$

Pour le plan $ax + by + cz + e$ l'équation est similaire.

La figure 2b montre ce qu'il advient d'une manière simple de l'écart à l'origine $d''$ d'un plan lorsque l'expression algébrique de ce plan dépend d'un nouveau repère après un changement de variable de $x$ en $x'$. La figure 2b montre tout simplement que $d''$ est égal à $2d + a_\epsilon x + b_\epsilon y + c_\epsilon z$. On remarquera que $a$, $b$ et $c$ sont fixés dès l'origine, pour un jeu de plans donné, par le choix de la rotation que l'on fait subir à l'octree objet avant de le projeter dans l'octree cible. Le terme en $a_\epsilon x + b_\epsilon y + c_\epsilon z$ dépend, par $a$, $b$, $c$, du jeu de plans concerné, et par $\epsilon x$, $\epsilon y$, $\epsilon z$, de la subdivision de l'octree cible justifiant le changement de variable.

Si on repère également par trois bits U V W le numéro de la subdivision octree cible concernée, on peut au moyen d'une table pré-calculée incluant le tableau 2 précédent, calculer $d''$ à partir de $d$. Autrement dit, pour l'opération de test, on choisit d'une part le numéro (X, Y, Z) d'une subdivision de l'octree objet et on en déduit, conformément au diagramme de la figure 2a les écarts à l'origine $d'$ et $e'$ correspondant aux plans de départ $d$ et $e$. Connaissant ensuite les équations modifiées de ces plans, on leur fait subir, conformément à la figure 2b, un changement de variable où $d'$ et $e'$ deviennent $d''$ et $e''$ en fonction du numéro (U, V, W) de la subdivision de l'octree cible avec laquelle on évalue l'intersection de la subdivision de l'octree objet concerné. Le diagramme de la figure 2 b est en pratique réalisé six fois. Il est réalisé d'une part deux fois pour transformer les $d'$ et les $e'$ respectivement en $d''$ et $e''$. Et cet ensemble est réalisé trois fois puisqu'il y a trois jeux de plans, conformément d'ailleurs à ce qui se passe dans le diagramme de la figure 2a. On remarque au passage que dans l'invention on évalue l'intersection d'une subdivision quelconque de l'octree objet systématiquement avec chacune des subdivisions correspondantes de l'octree cible.

La figure 2 c montre la composition des deux traitements effectués séparément dans les figures 2a et 2b. Pour ne pas surcharger l'explication, on a considéré qu'un seul jeu de plans (d, e) sachant que le traitement de la figure 2c doit être effectué trois fois pour les trois jeux de plans de délimitation. Astucieusement, plutôt que d'effectuer une division par deux et une multiplication par deux pour le calcul de chaque $d''$ et $e''$, on effectue une multiplication par deux de $d$ et $e$ avant d'introduire les résultats dans le circuit d'aiguillage AG. A la sortie du circuit AG il n'est bien entendu plus nécessaire, conformément à ce qui est décrit dans la figure 2b, de multiplier par deux les coefficients $d'$ et $e'$ obtenus. Le circuit AG continue à recevoir comme ordre d'aiguillage le numéro (X, Y, Z) de la subidivision octree objet concernée tandis que la table TB de changement de variable continue à recevoir en entrée le numéro U V W de la subdivision octree cible à laquelle on veut comparer la subdivision octree objet.

Les tests de réalité de l'intersection sont ensuite effectués en aval sur les valeurs $d''$ et $e''$ obtenues. Ces tests T1 et T2 nécessitent d'additionner à $d''$ et $e''$ respectivement les valeurs $K'$ et $K$ telles que

$$K = |a| + |b| + |c|$$
et $K' = - K$.

La valeur $K$ correspond en définitive à l'évaluation de la présence de un des sommets donnés d'une subdivision de l'octree cible à l'intérieur de la subdivision de l'octree objet étudié. Quand on additionne $K'$ ou $K$ à $d''$ ou $e''$ on peut alors faire ensuite un test par comparaison à zéro pour savoir si les deux subdivisions octree concernées ont une intersection commune. Dans le cas où la réponse à ces deux tests T1 et T2 est positive, une fonction ET recevant en aval le résultat de ces tests permet d'affecter la réponse oui ou non a la subdivision octree cible concernée. Le champ de propriété de cette subdivision octree cible reçoit cette réponse.

Pour un numéro de subdivision octree objet donné, on peut tester toutes les subdivisions correspondantes de l'octree cible avant de passer à une subdivision voisine de cet octree objet.

En projetant un octree objet dans un octree cible, selon un jeu de plan donné on opère simplement la rotation de l'octree objet. En définitive, on calcule ainsi l'intersection d'un octree objet donné avec un octree cible (vierge) dont on affecte les subdivisions du caractère vide, plein ou partiel, selon le caractère vide ou plein ou partiel des subdivisions de l'octree objet avec lesquelles les subdivisions d'octree cible ont une intersection. Chaque fois que la réponse aux tests d'intersection sera positive, on attribuera à la subdivision octree cible la qualification vide, plein ou partiel, de l'octree objet qu'elle intersecte. Si la subdivision octree cible a déjà reçu, par intersection avec une subdivision octree objet précédente, une qualification vide plein ou partiel, cette qualification est modifiée en fonction de la nouvelle intersection et en fonction de l'état de la nouvelle subdivision octree objet à laquelle on la compare. La règle de modification est la suivante :
- si le contenu était vide ou plein et que le nouvel état est respectivement vide ou plein le contenu n'est pas modifié ;
- si le contenu était vide ou plein et que le nouveau contenu devient respectivement plein ou vide, le contenu devient plein ;
- et si cette qualification était déjà partielle, elle le reste.

Mais plutôt que d'opérer la rotation d'un octree objet, on peut chercher à évaluer quelle est l'intersection de plusieurs octrees. Dans ce cas l'octree cible résulte de la projection des deux octree objet à intersecter dans cet octree cible. Au bout d'une première étape, l'octree cible comporte donc déjà dans ses subdivisions des qualifications vide, plein, ou partiel correspondant à un premier objet A1. On peut donc effectuer en une deuxième opération la projection, au besoin après une opération de rotation quelconque (ou identique), d'un octree objet A2. Cette technique n'est pas la meilleure et dans l'invention on en propose le perfectionnement suivant.

Dans l'explication qui va suivre, on évaluera ce qu'il advient de deux objets octree A1 ou A2 selon qu'on s'intéresse à leur intersection ou à leur réunion. Par exemple on pourra imaginer que l'objet octree A1 représente le crâne, y compris le maxillaire supérieur, tandis que l'objet octree A2 concerne le maxillaire inférieur. En faisant tourner les octree A1 et A2 ensemble, et l'un par rapport à l'autre, on s'intéresse en fait à visualiser l'ensemble de l'articulation de la mâchoire sous différents angles. Par contre en ne faisant que tourner l'octree A2 on s'intéresse en fait à la cinématique du maxillaire inférieur dans le maxillaire supérieur. Quand on s'intéresse à l'union des deux objets octree on s'intéresse à l'image globale; Quand on s'intéresse à l'intersection de ces deux objets octree, intersections fictives puisque physiologiquement impossibles, on s'intéresse aux régions de l'objet à visualiser qui pourraient être le lieu d'affections particulières du fait de contraintes locales qu'elles subissent : tentatives d'interpénétration.

Dans l'invention, quand on vérifie l'intersection d'une subdivision de l'objet A1 avec une subdivision de l'octree cible puis l'intersection d'une subdivision de l'objet A2 avec cette même subdivision de l'octree cible, on admet qu'il y a intersection des subdivisions des deux octree objets même si par ailleurs il n'y a pas réellement intersection des deux objets A1 et A2 entre eux. On peut ainsi produire, au niveau de l'octree cible, une information selon laquelle il y a intersection de ces deux octree objet, alors que cela n'est pas vrai. Ce procédé, tout en étant faux, présente par contre l'avantage d'aller plus vite. Et on se rendra compte que des subdivisions ultérieures de l'octree cible permettent par la suite de lever l'ambiguïté de telles qualifications. Ces subdivisions conduiront à gommer le caractère provisoirement faux des qualificatifs attribués aux subdivisions de l'octree cible qui est le seul qu'on cherche ultérieurement à visualiser.

Supposons que des tests évoqués précédemment,de comparaison d'une subdivision de l'octree cible avec subdivision de l'octree objet A1 d'une part et de comparaison de cette même subdivision de l'octree cible avec une subdivision de l'octree A2 d'autre part, aient donné un résultat positif. On regarde alors le contenu des subdivisions des octree objet A1 et A2 concernés. Soit ces deux subdivisions sont toutes les deux vides, soit elles sont toutes les deux partielles, ou encore elles sont toutes les deux pleines. Si elles sont toutes les deux vides ou pleines on attribue le caractère vide ou plein respectivement à la subdivision correspondante de l'octree cible et on passe à la subdivision suivante de l'octree cible. Pour un niveau hiérarchique donné on compare ainsi chacune des subdivisions de l'octree cible aux subdivisions correspondantes de chacun des deux octree objet. Si les deux subdivisions de A1 et A2 concernées comportent un résultat dit partiel P on est alors amenés à subdiviser l'octree cible B d'une part et les deux octree objet A1 et A2 d'autre part. L'octree cible donne ainsi naissance à huit subdivisions qui doivent être comparées aux huit subdivisions de l'octree objet A1 (64 comparaisons) et qui doivent être comparées aux huit subdivisions de l'octree objet A2 (là aussi 64 comparaisons). On a donc à réaliser 128 comparaisons effectives (à ne pas confondre avec les 512 comparaisons qu'il faudrait réaliser si on voulait savoir par ailleurs si les comparaisons positives entre l'octree cible B et l'octree objet A1 ont effectivement une

EP 0 445 173 B1

répercussion dans les subdivisions de l'octree objet A2 (8X64 = 512)). Le fait de ne pas faire ces 512 comparaisons revient à faire l'hypothèse (provisoirement fausse) que si l'octree objet A1 a une intersection avec l'octree cible B, et s'il en est de même pour l'octree objet A2, on considérera que A1 et A2 ont une intersection commune. Si au niveau de la subdivision faite on retrouve des subdivisions de A1 et A2 qui sont partielles toutes deux tout en étant communes à une même subdivision de l'octree cible B, on subdivise à nouveau ces subdivisions. Sachant que ces subdivisions sont partielles on finira forcément par tomber sur une situation où l'une des deux subdivisions par exemple A1 est partielle tandis que l'autre est vide (E), ou bien une situation où l'une des subdivisions est partielle tandis que l'autre est pleine (F). Bien entendu ces subdivisions, pour que la comparaison soit intéressante, doivent intersecter la même subdivision correspondante de l'octree cible B. Etant ainsi dans la situation (P, E) ou la situation (P, F) on va alors s'intéresser à la nature de l'opération recherchée.

Supposons que l'on soit dans le cas où la subdivision A1 est partielle (P) et la subdivision A2 est vide (E) et qu'on s'intéresse à une union. Comme le résultat à attribuer à la subdivision de l'octree cible est alors P (en effet l'union de partiel et de vide donne partiel), on se rend compte qu'il est nécessaire de subdiviser l'octree cible. En effet cette subdivision est à ce stade indéterminée : elle ne peut servir à une représentation. Mais comme par ailleurs l'octree A2 est à ce niveau vide, il n'est plus nécessaire de se préoccuper (sous certaines réserves) de l'évolution des subdivisions de A2 qui seront bien entendu elles aussi toujours vides. Le problème est alors de ne s'intéresser qu'à la subdivision corrélative de l'octree cible B et de l'un des deux octree objet l'octree objet A1. Ce qu'il y a lieu de faire est typiquement ce qui a été évoqué précédemment dans la description de l'invention. On procède ainsi à la dichotomie corrélative de B et de A1 jusqu'à faire le distingo entre les parties de l'octree cible qui seront affectées du qualificatif vide et celles qui seront affectées du qualificatif plein. Cependant il est nécessaire de se souvenir que cette attribution de qualificatifs à l'octree cible ne doit être faite que dans les limites de cet octree cible qui sont contenues dans l'octree A2, au niveau duquel on s'est arrêté avant qu'on ne le subdivise plus. Si on se reporte au diagramme de la figure 2a ceci signifie que, en ce qui concerne la subdivision de l'octree A2, d' et e' sont figés (pendant tout le reste de cette partie de la subdivision de l'octree B corrélativement avec l'octree objet A1) aux valeurs d' et e' correspondantes à la subdivision concernée de l'octree objet A2.

Par conséquent, figure 2b, il n'y a plus lieu d'appliquer que les changements de variables liés aux choix des repères dépendant de la subdivision étudiée de l'octree cible. C'est une des raisons supplémentaires pour lesquelles il y a intérêt à passer en revue les subdivisions de l'octree objet A1 face aux subdivisions correspondantes de l'octree cible B : en effet il n'est pas nécessaire de faire trop souvent ces changements de variables. Bien entendu, connaissant les deux octrees A1 et A2 le diagramme de la figure 2c est à prendre en considération deux fois.

Toujours dans le cas où A1 est partiel, et où A2 est vide, mais dans le cas où on s'intéresse à l'intersection, le résultat à affecter à la subdivision correspondante de l'octree cible est vide : Et dans ce cas on ne subdivise plus.

Le cas où A1 est partiel mais où A2 est plein (F) est dual du précédent. C'est à dire que quand on s'intéresse à l'intersection on est amené à subdiviser, tandis que si on s'intéresse à l'union, on s'arrête et on attribue le caractère plein à la subdivision concernée de l'octree cible. Dans le cas où on s'intéresse à l'intersection, et où on subdivise, on subdivise bien entendu l'octree objet A1 en correspondance avec l'octree cible B tout en respectant, comme pour le cas dual, les limites imposées par la définition de la subdivision de l'octree objet A2 sur laquelle on s'est arrêté.

Dans ce dernier cas cependant, lorsque A1 est partiel, lorsque A2 est plein (F), et lorsqu'on s'intéresse à l'union, on peut quand même effectuer la subdivision de A2, d'une part parce qu'on peut vouloir connaître exactement B et d'autre part parce qu'on veut pouvoir détecter la présence d'une intersection réelle. Dans ce cas on cherche à savoir si l'union comporte une intersection des deux objets ou si elle ne comporte que deux objets géométriquement distincts. En effet, quand on s'intéresse à l'union, c'est l'image de l'union qui va être visualisée. Par exemple quand on s'intéresse a la mâchoire inférieure s'imbriquant dans la mâchoire supérieure on peut provoquer les mouvements de l'ensemble, visualiser cet ensemble : l'union. Mais également on peut vouloir savoir si, même dans les parties cachées et donc non visibles, des collisions, ou des interpénétrations, se dessinent. C'est pour cette raison que, bien que pour des raisons de visualisation, le fait d'avoir retenu qu'un noeud A2 était plein était suffisant, on peut s'intéresser, pour des raisons de collisions, d'interpénétration, à l'intersection des subdivisions de l'octree A2 avec l'octree cible.

Compte tenu dans ce cas de ce que l'octree A2 est plein et qu'il n'y a pas à subdiviser, on se contente alors de faire la subdivision corrélative de l'octree objet A1 et de l'octree cible B. Cependant il faut savoir qu'on a déjà attribué aux subdivisions de l'octree cible le qualificatif de plein (du fait de l'intersection avec une subdivision correspondante de l'octree objet A2). Aussi, on ne peut plus que rajouter un caractère supplémentaire, dans le champ de propriété, aux subdivisions de l'octree cible, pour lesquelles on trouvera

10

des subdivisions de l'octree objet A1 qui sont aussi pleines (F). Cette information supplémentaire pourra être donnée sous la forme d'un code de couleur caractéristique : par exemple on fera une coloration en rouge des parties de l'objet, en principe masquées, mais qui donnent lieu, dans un arrière plan non visible, à une interpénétration.

Lorsqu'on aura décidé, pour une des raisons évoquées ci-dessus, de ne plus effectuer d'une manière corrélative la subdivision de l'octree cible avec la subdivision d'un des octree objet, on pourra produire un signal d'inactivité. Ce signal d'inactivité IN a pour objet de neutraliser le circuit d'aiguillage AG ainsi que les circuits associés, de manière à ce que les écarts à l'origine d et e retenus à ce niveau hiérarchique soient transmis tels quels pour la suite des tests. De telle façon que ces valeurs soient figées dans l'état qu'elles avaient atteint pour la subdivision pour laquelle on s'est arrêté.

Pour diverses raisons et qui ont été particulièrement mises en évidence ici, on se rend compte que le test d'intersection peut ne pas être suffisant. Aussi, dans le cas où on a décidé d'attribuer un qualificatif à une subdivision considérée de l'octree cible, on ne confirmera ce qualificatif que si, en pratique, le centre de la subdivision de l'octree cible B est à l'intérieur des six demi-espaces concernés par les descriptions des subdivisions de l'octree objet A1, ou des subdivisions des octree objet A1 et A2 (et A3 etc...) s'il y a plusieurs octree objet à considérer. Dans ce but, il suffit de prendre, figure 2c, $K = K' = 0$. En effet ceci revient à tester, dans le repère attribué à la subdivision de l'octree cible à qualifier, la position du centre du repère tel que $x = y = z = 0$. Par une commande C on peut temporairement neutraliser les valeurs de K et K'. Dans ce cas le test est en deux temps. pour tous les tests intermédiaires (les plus nombreux) on se contente du test sur les sommets. Pour les tests finaux on recherche en plus la position du centre de la subdivision d'intersection.

On remarque que la méthode est très performante en ce sens que deux objets de deux octree différents sont très rapidement disjoints. Aussi, on se trouve très rapidement dans la situation où le test composite de l'octree cible B avec les subdivisions des octree objet A1 et A2 ne revient plus qu'à faire un test sur l'octree cible B et sur un des octree objet. Il est évident que chaque fois qu'on a parlé d'octree objet A1 il était possible d'envisager, d'une manière complémentaire, l'octree objet complémentaire de l'octree objet A1. Ceci signifie que les opérations de réunion et d'intersection entre des octree objet peuvent se résoudre en des opérations d'intersection et de réunion entre des octree objet complémentaires. De manière générale des opérations booléennes complexes peuvent être réalisées entre n octree. L'objet résultant peut en définitive être visualisé en effectuant ensuite la projection canonique de l'octree cible déterminé.

L'invention permet par ailleurs d'effectuer la visualisation en perspective, dans un repère adapté à l'observateur des objets à visualiser. La figure 4 montre la représentation, dans un repère lié à l'observateur, la visualisation d'un point M de coordonnées x y z. On sait pour la visualisation en perspective, si x et y sont les coordonnées de M dans un du plan perpendiculaire à la direction z moyenne de visualisation, que les coordonnées apparentes $x_o$ et $y_o$ du point à visualiser sont dépendantes de la distance z à laquelle ce point se situe de l'observateur. En définitive, ceci revient à remplacer x par $x_o$ avec $x_o = x/z$ et y par $y_o$ avec $y_o = y/z$. Ce remplacement est à un coefficient multiplicatif près, constant, revenant à modifier les constantes, a b c et d. Ce coefficient est pris égal à 1 par soucis de clarté. Si dans l'équation du plan concerné par la définition d'un octree objet, $ax + by + cz + d = 0$ on divise chacun des termes par z, on obtient

$$ax/z + by/z + c + d/z = O$$

Ceci revient encore, en remplaçant x/z par L, y/z par M et 1/z par N, à la définition d'un nouveau plan de la forme suivante

$$aL + bM + dN + c = O$$

Ceci revient tout simplement à définir, conformément à ce qui a été décrit précédemment, des nouveaux plans avec des coefficients directeurs changés. Les plans qui bordent l'octree objet projeté dans l'octree cible ne sont plus parallèles. On peut tenir compte du fait que ces plans sont cependant couplés 2 par 2 tels que un plan (a, b, c, d) est associé à un plan (h, i, j, k). Il en est de même pour les deux autres jeux de plans définissant l'octree objet A. Si on subdivise l'octree objet projeté, cet octree objet sera subdivisé en deux demi-espaces par un plan dont l'équation est

$$(a+h) L/2 + (b+i) M/2 + (c+j) N/2 + (d+k)/2 = O.$$

En effet le vecteur normal à ce plan est la moitié de la somme des vecteurs normaux aux deux plans précédents. La condition d'intersection est alors du même type que précédemment

$$|a| + |b| + |c| + d > O \text{ et}$$
$$-|h| - |i| - |j| + k < O$$

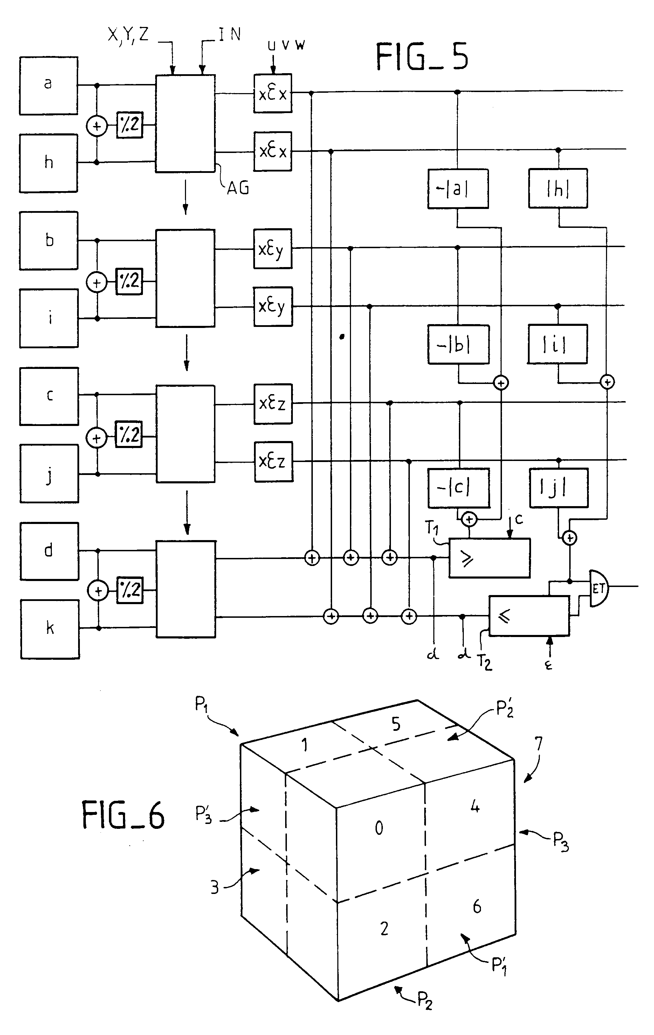

On pourra modifier d'une manière simple, conformément à la figure 5 la réalisation matérielle du circuit de la figure 2c. Dans celle-ci d'une part K et K' sont recalculés à chaque fois, puisqu'ils varient à chaque fois. D'autre part les valeurs de a, b et c sont mémorisées pour être ultérieurement réutilisées en entrée pour une subdivision suivante.

Mais la principale difficulté réside dans la détermination de l'ordre dans lequel doivent être visitées les subdivisions des noeuds de l'octree objet A. En fait, cet ordre est déterminé par le signe de c + j (pour chaque paire de plans). En effet, il est nécessaire de se rappeler que les plans ainsi indiqués et qui se coupent au niveau de l'oeil de l'observateur sont des plans résultant de la rotation et de la projection de l'octree objet dans l'octree cible. L'octree objet lui-même n'est pas modifié de sorte que la décomposition de l'octree objet n'est pas visée. Seul est visé l'ordre dans lequel doivent être testées les subdivisions correspondantes de cet octree objet. La figure 6 représente les trois paires de plans, latéraux P1 P'1, supérieurs et inférieurs P'2 P2, frontaux et arrière P'3 P3, qui encadrent l'octree déformé par la perspective et comportant les subdivisions notées de 0 à 7, les subdivisions 0 à 3 étant proches de l'observateur. La particularité des plans représentés est qu'ils se coupent tous en des points de fuite opposés à l'oeil de l'observateur. Un plan intermédiaire entre deux de ces plans doit être comparé à la direction z du repère lié à l'observateur. Un vecteur perpendiculaire à ce plan intermédiaire est alors donné par ses cosinus directeurs qui sont

$$(a + h)/2, (b + i)/2, (c + j)/2.$$

La composante c + j permet de déterminer qu'un demi espace est en amont ou en aval par apport à l'observateur, et s'il doit être visité avant un autre ou non. Selon le signe de ces coefficients, le premier noeud visité et le dernier noeud visité sont donnés par le tableau suivant

| Signe a + h | Signe b + i | Signe c + j | 1er noeud visité | dernier noeud visité |
|:---:|:---:|:---:|:---:|:---:|
| + | + | + | 7 | 0 |
| - | + | + | 6 | 1 |
| + | - | + | 5 | 2 |
| - | - | + | 4 | 3 |
| + | + | - | 3 | 4 |
| - | + | - | 2 | 5 |
| + | - | - | 1 | 6 |
| - | - | - | 0 | 7 |

Les autres noeuds visités se déduisent avec, en priorité, la visite des noeuds voisins du premier noeud visité. Par exemple dans le premir cas un ordre possible est 7,6,5,4,3,2,1 et 0 comme dernier noeud. Il est important de constater que l'ordre de visite est déterminé pour tout noeud que l'on veut subdiviser. Il n'est en général pas constant pour tout l'octree. La technique de projection en perspective est généralisable à toutes les fonctions précédemment décrites en particulier visualisation de plusieurs octree, test de collision ou de détermination d'une intersection, et projection d'opérations booléennes entre octree. On remarque que la technique ci-dessus décrite de représentation de perspective ne rend pas nécessaire le calcul des coordonnées L M et N elles mêmes.

**Revendications**

1. Procédé de visualisation d'un objet dont la représentation est emmagasinée dans une mémoire selon une décomposition dite octree objet (A), où une subdivision père est décomposée en huit subdivisions fils, procédé dans lequel une structure d'octree cible (B), organisée selon des directions principales différentes des directions principales de l'octree objet, est déterminée par un dispositif de traitement d'information selon les étapes suivantes:

- on subdivise corrélativement l'octree objet (A0-A1) et l'octree cible (B0-B1) et
- on évalue (ET) s'il y a intersections de subdivisions de l'octree cible avec des subdivisions de l'octree objet,
- on attribue à la subdivision de l'octree cible un qualificatif correspondant au qualificatif de la subdivision de l'octree objet avec laquelle cette subdivision de l'octree cible a une intersection
- et on visualise les subdivisions de cet octree cible qui correspondent à ces intersections, représentatives d'un examen particulier de l'octree objet, et donc de l'objet lui-même, caractérisé en ce que pour subdiviser l'octree objet et l'octree cible
- on calcule (fig 6) pour $i = 1$ à 3, dans un repère x y z associé au centre de la subdivision père de l'octree cible, les équations

$$a_i x \ + \ b_i y \ + \ c_i z \ + \ d'_i \text{ et}$$
$$a_i x \ + \ b_i y \ + \ c_i z \ + \ e'_i$$

des trois paires de plans directeurs parallèles délimitant la subdivision fils (X, Y, Z) de l'octree objet,
- on calcule (fig 2b) les nouvelles équations

$$a_i x' \ + \ b_i y' \ + \ c_i z' \ + \ d''_i \text{ et}$$
$$a_i x' \ + \ b_i y' \ + \ c_i z' \ + \ e''_i$$

obtenues par un changement de repère x' y' z' associé au centre de la subdivision fils de cet octree cible avec

$$x' \ = \ 2x - \epsilon x$$
$$y' \ = \ 2x - \epsilon y$$
$$z' \ = \ 2z - \epsilon z$$

où $\epsilon x$, $\epsilon y$, $\epsilon z$ sont fonction de la subdivision fils (U,Y,W) testée de l'octree cible,
et en ce que pour évaluer s'il y a intersection
- on vérifie si une subdivision fils de l'octree cible satisfait à une condition d'intersection avec la subdivision fils de l'octree objet en testant pour la subdivision fils de l'octree cible que la somme

$$K \ = \ |a_i| \ + \ |b_i| \ + \ |c_i|$$

des valeurs absolues des coefficients directeurs de chacun des plans directeurs délimitant une subdivision fils de l'octree objet, est simultanément plus grande que $-d''_i$ et plus grande que $+e''_i$ pour chaque paire de plans $i \ = \ 1$ à 3.

2. Procédé selon la revendication 1, caractérisé en ce que l'objet à visualiser est un objet comprenant au moins deux parties d'objet correspondant à deux décompositions octree objet (A1-A2), dans lequel
   - on vérifie l'intersection d'une subdivision de l'octree cible avec une subdivision de l'une des deux parties de l'objet,
   - puis l'on vérifie l'intersection de cette même subdivision de l'octree cible avec une subdivision correspondante de l'autre partie de l'objet,
   - et en ce qu'on attribue un qualificatif à cette subdivision de l'octree cible, lorsqu'il y a intersection de cette subdivision octree cible avec les deux subdivisions des octree objets,
   - le qualificatif attribué dépendant du qualificatif de ces subdivisions de parties d'objet d'une part, et d'un mode de combinaison désiré de ces parties d'objet d'autre part.

3. Procédé selon la revendication 2 caractérisé en ce qu'on cesse les vérifications de l'intersection d'une subdivision d'un octree d'une partie de l'objet avec une subdivision de l'octree cible lorsqu'une subdivision de cet octree d'une partie de l'objet est vide ou pleine.

4. Procédé selon l'une quelconque des revendications 1 à 3, caractérisé en ce qu'on attribue un qualificatif à une subdivision de l'octree cible après le succès d'un test mesurant l'appartenance du centre de la subdivision de l'octree cible à qualifier à une subdivision correspondante de l'octree objet ou de l'octree d'une partie de cet objet.

**5.** Procédé selon l'une quelconque des revendications 1 à 4 dans lequel, pour subdiviser l'octree cible selon des plans correspondant aux directions principales des subdivisions de l'octree objet, on effectue une transformation algébrique ((a+h)/2) des coefficients directeurs de ces plans en fonction de la position de cette subdivision de l'octree cible par rapport à un point d'observation.

**6.** Procédé selon la revendication 5 caractérisé en ce que pour la vérification on choisit des subdivisions de l'octree objet selon un ordre déterminé par la position de la subdivision octree cible à laquelle on veut les comparer.

**Claims**

**1.** Method of displaying an object, the representation of which is stored in a memory in accordance with a so-called object octree decomposition (A), where a parent subdivision is decomposed into eight child subdivisions, a method in which a target octree structure (B), organised in principal axes different from the principal axes of the object octree, is determined by a data processing device in accordance with the following stages:
   - the object octree (A0-A1) and target octree (B0-B1) are correlatively subdivided and
   - it is determined (ET) whether there are intersections of subdivisions of the target octree with subdivisions of the object octree,
   - a qualifier is allocated to the subdivision of the target octree, corresponding to the qualifier for the subdivision of the object octree with which this subdivision of the target octree has an intersection
   - and the subdivisions of this target octree which correspond to these intersections, representing a particular examination of the object octree and therefore of the object itself, are displayed, characterised in that, in order to subdivide the object octree and target octree
   - for i = 1 to 3, in a reference frame x y z associated with the centre of the parent subdivision of the target octree, the equations

   $$a_i x + b_i y + c_i z + d'_i \text{ and}$$
   $$a_i x + b_i y + c_i z + e'_i$$

   of three pairs of parallel directrix planes delimiting the child subdivision (X, Y, Z) of the object octree are calculated (Fig 6),
   - the new equations

   $$a_i x' + b_i y' + c_i z' + d''_i \text{ and}$$
   $$a_i x' + b_i y' + c_i z' + e''_i$$

   obtained by a change of reference frame x' y' z' associated with the centre of the child subdivision of this target octree are calculated (Fig 2b) where

   $$x' = 2x - \epsilon x$$
   $$y' = 2x - \epsilon y$$
   $$z' = 2z - \epsilon z$$

   where $\epsilon x$, $\epsilon y$, $\epsilon z$ are a function of the tested child subdivision (U, V, W) of the target octree, and in that, in order to determine whether there is an intersection
   - a check is made whether a child subdivision of the target octree satisfies an intersection condition with the child subdivision of the object octree by testing whether, for the child subdivision of the target octree, the sum

   $$K = |a_i| + |b_i| + |c_i|$$

   of the absolute values of the directrix coefficients of each of the directrix planes delimiting a child subdivision of the object octree is simultaneously greater than $-d''_i$ and greater than $+e''_i$ for each pair of planes i = 1 to 3.

**2.** Method according to Claim 1, characterised in that the object to be displayed is an object comprising at least two object parts corresponding to two object octree decompositions (A1-A2), in which

- it is verified that there is an intersection of a subdivision of the target octree with a subdivision of one of the two parts of the object,
- then it is verified that there is an intersection of this same subdivision of the target octree with a corresponding subdivision of the other part of the object,
- and in that a qualifier is allocated to this subdivision of the target octree, when there is an intersection of this target octree subdivision with the two subdivisions of the object octrees,
- the qualifier allocated depending on the qualifier of these subdivisions of object parts on the one hand, and on a desired mode of combination of these object parts on the other hand.

3. Method according to Claim 2, characterised in that the checks whether there is an intersection of a subdivision of an octree of a Part of the object with a subdivision of the target octree are stopped when a subdivision of this octree of a part of the object is empty or full.

4. Method according to any one of Claims 1 to 3, characterised in that a qualifier is allocated to a subdivision of the target octree after a successful test measuring that the centre of the subdivision of the target octree to be qualified belongs to a corresponding subdivision of the object octree or of the octree of a part of this object.

5. Method according to any one of Claims 1 to 4 in which, in order to subdivide the target octree according to the planes corresponding to the principal axes of the subdivisions of the object octree, an algebraic transformation $((a+h)/2)$ of the directrix coefficients of these planes is carried out as a function of the position of this subdivision of the target octree with respect to an observation point.

6. Method according to Claim 5, characterised in that, for the verification, subdivisions of the object octree are chosen in an order determined by the position of the target octree subdivision with which it is desired to compare them.

## Patentansprüche

1. Verfahren zum Anzeigen eines Objektes, dessen Darstellung in einem Speicher gemäß einer sogenannten Objektoctreezerlegung (A) gespeichert ist, wo eine Mutterunterteilung in acht Tochterunterteilungen zerlegt ist, in welchem Verfahren eine Zieloctreestruktur (B), die gemäß von den Hauptrichtungen des Objektoctrees verschiedenen Hauptrichtungen organisiert ist, durch eine Informationsverarbeitungsvorrichtung gemäß den folgenden Schritten bestimmt wird:
   - das Objektoctree (A0-A1) und das Zieloctree (B0-B1) werden korrelativ unterteilt und
   - es wird ausgewertet (UND), wenn es Schnittmengen von Unterteilungen des Zieloctrees mit Unterteilungen des Objektoctrees gibt,
   - es wird der Unterteilung des Zieloctrees ein Attribut entsprechend dem Attribut der Unterteilung des Objektoctrees zugeordnet, mit dem die Unterteilung des Zieloctrees eine Schnittmenge aufweist,
   - und es werden die Unterteilungen des Zieloctrees angezeigt, die diesen Schnittmengen entsprechen, welche eine spezielle Prüfung des Objektoctrees und daher des Objekt selbst darstellen,
   dadurch **gekennzeichnet,** daß zum Unterteilen des Objektoctrees und des Zieloctrees
   - in einem Bezugspunkt x y z, der dem Zentrum der Mutterunterteilung des Zieloctrees zugeordnet ist, während für i = 1 bis 3 die Gleichungen

   $a_i x + b_i y + c_i z + d'_i$ und
   $a_i x + b_i y + c_i z + e'_i$

   der drei Paare von parallelen Leitebenen berechnet (Fig. 6), die die Tochterunterteilung (X, Y, Z) des Objektoctrees begrenzen,
   - es werden die neuen Gleichungen

   $a_i x' + b_i y' + c_i z' + d''_i$ und
   $a_i x' + b_i y' + c_i z' + e''_i$

   berechnet (Fig. 2b), die durch eine Änderung des Bezugspunktes x' y' z' erhalten werden, der dem Zentrum der Tochterunterteilung des Zieloctrees zugeordnet ist mit

15

$$x' = 2x - \epsilon x$$
$$y' = 2x - \epsilon y$$
$$z' = 2z - \epsilon z$$

wobei $\epsilon x$, $\epsilon y$, $\epsilon z$ eine Funktion der untersuchten Tochterunterteilung (U, V, W) des Zieloctrees sind, und daß zur Auswertung, ob es eine Schnittmenge gibt,

- überprüft wird, ob eine Tochterunterteilung des Zieloctrees eine Schnittmengenbedingung mit der Tochterunterteilung des Objektoctrees erfüllt, in dem für die Tochterunterteilung des Zieloctrees untersucht wird, ob die Summe

$$K = |a_i| + |b_i| + |c_i|$$

der Absolutwerte der Leitkoeffizienten jeder der Leitebenen, die einer Tochterunterteilung des Objektoctrees begrenzen, gleichzeitig größer als $-d''_i$ und größer als $+e''_i$ für jedes Ebenenpaar i $= 1$ bis 3 ist.

2. Verfahren nach Anspruch 1, dadurch **gekennzeichnet,** daß das zu zeigende Objekt ein Objekt ist, das wenigstens zwei Objektteile entsprechend zwei Objektoctreezerlegungen A1-A2 umfaßt, bei dem
   - die Schnittmenge einer Unterteilung des Zieloctrees mit einer Unterteilung des einen der beiden Objektteile überprüft wird,
   - dann die Schnittmenge derselben Unterteilung des Zieloctrees mit einer entsprechenden Unterteilung des anderen Teils des Objektes überprüft wird,
   - und daß dieser Unterteilung des Zieloctrees ein Attribut zugeordnet wird, wenn es eine Schnittmenge dieser Zieloctreeunterteilung mit den beiden Unterteilungen der Objektoctrees gibt,
   - wobei das zugeordnete Attribut von dem Attribut der Unterteilungen von den Objektteilen einerseits und einem gewünschten Kombinationsmodus der Objektteile andererseits abhängig ist.

3. Verfahren nach Anspruch 2, dadurch **gekennzeichnet,** daß die Überprüfungen der Schnittmenge einer Unterteilung eines Octrees eines Teils des Objektes mit einer Unterteilung des Zieloctrees eingestellt wird, wenn eine Unterteilung des Octrees eines Teils des Objektes leer oder voll ist.

4. Verfahren nach einem beliebigen der Ansprüche 1 bis 3, dadurch **gekennzeichnet,** daß ein Attribut einer Unterteilung des Zieloctrees nach dem Erfolg einer Untersuchung zugeordnet wird, die die Zugehörigkeit des Zentrums der Unterteilung des zu qualifizierenden Zieloctrees mit einer entsprechenden Unterteilung des Objektoctrees oder des Octrees eines Teils dieses Objektes mißt.

5. Verfahren nach einem beliebigen der Ansprüche 1 bis 4, bei dem zur Unterteilung des Zieloctrees gemäß Ebenen entsprechend den Hauptrichtungen der Unterteilungen des Objektoctrees eine algebraische Transformation $((a+h)/2)$ der Leitkoeffizienten der Ebenen abhängig von der Position dieser Unterteilung des Zieloctrees in bezug auf einen Beobachtungspunkt ausgeführt wird.

6. Verfahren nach Anspruch 5, dadurch **gekennzeichnet,** daß für die Überprüfung Unterteilungen des Objektoctrees gemäß einer Reihenfolge gewählt werden, die durch die Position der Zieloctreeunterteilung bestimmt ist, mit dem sie verglichen werden sollen.

FIG_1-a

FIG_1-b

FIG_1-c

FIG_2-a

FIG_2-b

FIG_2-c

## FIG_3

P0    P'    P1

6    7

2    3

4    5

0    1

−  +    −  +

ax + by + cz + d = 0    ax + by + cz + e = 0

## FIG_4

x

M

x

$x_0$

z

y

FIG_5

FIG_6